# EUROPÄISCHE PATENTSCHRIFT

(11) **EP 1 146 069 B1**
(45) Veröffentlichungstag und Bekanntmachung des Hinweises auf die Patenterteilung: **12.09.2007**
(21) Anmeldenummer: 01107846.6
(22) Anmeldetag: 09.04.2001
(51) Int. Cl.: C08J 7/04, C09D 183/04, C09D 1/00, C08J 7/06

(54) **Kunststoffe die mit Zinkoxidhaltigen, abriebfesten Multischichten stabilisiert sind**
Plastics stabilised with zinc oxide containing multilayers
Matières plastiques stabilisées avec un revêtement multicouche contenant de l' oxide de zinc

(30) Priorität: 14.04.2000 DE 10018429
(43) Veröffentlichungstag der Anmeldung: 17.10.2001
(73) Patentinhaber: Bayer MaterialScience AG, 51368 Leverkusen (DE)
(72) Erfinder: Hofacker, Steffen, Dr., 35510 Butzbach (DE); Mager, Michael, Dr., 51375 Leverkusen (DE); Womelsdorf, Hermann-Jens, Dr., 51375 Leverkusen (DE)

(56) Entgegenhaltungen:
- EP-A- 0 763 581
- WO-A-00/27931
- WO-A-00/55656
- WO-A-98/38251
- DE-A- 19 907 704
- JP-A- 11 179 837
- DATABASE CAPLUS [Online] CHEMICAL ABSTRACTS SERVICE, COLUMBUS, OHIO, US; LI HAOYING: "Preparation of organic-inorganic multifunctional nanocomposite coating via sol-gel routes." Database accession no. 2001:803211 XP002217690 & JOURNAL OF NANOPARTICLE RESEARCH, Bd. 3, Nr. 2-3, 2001, Seiten 157-160,
- PATENT ABSTRACTS OF JAPAN vol. 1996, no. 10, 31. Oktober 1996 (1996-10-31) & JP 08 165145 A (TONEN CORP), 25. Juni 1996 (1996-06-25) & DATABASE CAPLUS [Online] CHEMICAL ABSTRACTS SERVICE, COLUMBUS, OHIO, US; 1996:583526, 1996
- PATENT ABSTRACTS OF JAPAN vol. 1995, no. 07, 31. August 1995 (1995-08-31) & JP 07 097535 A (SUMITOMO OSAKA CEMENT CO LTD;OTHERS: 01), 11. April 1995 (1995-04-11)
- PATENT ABSTRACTS OF JAPAN vol. 2000, no. 04, 31. August 2000 (2000-08-31) & JP 2000 007996 A (HITACHI LTD), 11. Januar 2000 (2000-01-11)

## Beschreibung

Die Erfindung betrifft Kunststoffe, die mit zinkoxidhaltigen, abriebfesten Multischichten stabilisiert sind.

Viele Kunststoffe müssen für den Einsatz im Außenbereich mit einem geeigneten UV-Absorber geschützt werden, um eine Degradation zu vermeiden. Dies kann z.B. dadurch erreicht werden, dass man dem Kunststoff im gesamten Volumen UV-Absorber zusetzt. Es ist auch möglich, den Kunststoff mit einer UV-Absorber-haltigen Beschichtung zu schützen, die z.B. mittels Coextrusion oder auch nasschemisch aufgebracht werden kann.

Üblicherweise können Kunststoffe durch Verwendung organischer UV-Absorber gut geschützt werden. Bei sehr lange dauernder Belastung durch UV-Strahlung (z.B. Sonnenlicht) werden organische UV-Absorber jedoch langsam selbst abgebaut und verlieren somit ihre Schutzwirkung. Durch Witterungseinflüsse (Feuchtigkeit, höhere Temperaturen) kann es darüber hinaus zum Verlust von UV-Absorber durch Migration und Auswaschen kommen.

Anorganische UV-Absorber wie beispielsweise Zinkoxid weisen hingegen die genannten Nachteile organischer UV-Absorber nicht auf. Ist die Partikelgröße des eingesetzten Zinkoxids (nano-ZnO) darüber hinaus noch klein genug, so gelingt es hochtransparente Schichten daraus herzustellen. Die Herstellung solcher Zinkoxidnanopartikel ist z.B. in der deutschen Patentanmeldung DE 19907704.5 beschrieben.

Soll der Kunststoff neben dem Schutz vor UV-Strahlung auch noch gegen mechanische Beschädigung geschützt werden, so kann dies durch Aufbringen einer abriebfesten Beschichtung erreicht werden. Insbesondere beim Ersatz von Glas durch Kunststoffe wie Polycarbonat werden extreme Anforderungen an die Abriebfestigkeit gestellt. Mittlerweile sind einige Beschichtungen beschrieben worden, die diese hohen Anforderungen erfüllen. Beispiele finden sich in den US-A 5 677 410, DE-A 196 03 241, WO 98/52992, EP-A 947 520, DE-A 45 38 361 und EP-A 0 263 428. Die Einarbeitung von Zinkoxid in diese Beschichtungen ist jedoch oftmals problematisch, da dies zu einem Verlust an Abriebfestigkeit führen kann. Daneben kann es durch unzureichende Verträglichkeit auch zur Aggregation oder Agglomeration der Zinkoxid-Nanopartikeln in der Beschichtung kommen, wodurch Trübungen auftreten. Enthalten die Beschichtungslösungen saure Katalysatoren (was bei vielen Sol-Gel-Lösungen der Fall ist) so wird Zinkoxid aufgelöst und trägt nicht mehr zum UV-Schutz bei.

JP 08-165145 beschreist eine UV-absorbierende Platte, welche einer speziell hergestellten SiO₂- Schicht Metalloxidpartikel einer Gröβe von 0,005-1 µm enthält. Als zweite Schicht kann eine polysilazanbasierte Deckschicht aufgebracht sein, über deren Abriebfestigkeit nichts ausgesagt wird.

Aufgabe der vorliegenden Erfindung war daher die Bereitstellung von Kunststoffen, die dauerhaft vor UV-Strahlung geschützt sind und eine abriebfeste Oberfläche aufweisen, wobei die obengenannten Nachteile bei der Herstellung geeigneter Beschichtungen vermieden werden.

Überraschend wurde nun gefunden, dass mit einem speziellen Mehrschichtaufbau, bestehend aus mindestens einer ZnO-haltigen Schicht und mindestens einer abriebfesten Schicht, Kunststoffe mit den genannten Eigenschaften bereitgestellt werden können.

Gegenstand der vorliegenden Erfindung sind daher dauerhaft gegen UV-Strahlung geschützte Kunststoffe mit einer abriebfesten Oberfläche gemäß Anspruch.

Als ZnO-Quellen werden ZnO-Nanopartikel mit Primär-Partikelgrößen von 1-30 nm eingesetzt werden. Bevorzugt sind solche ZnO-Nanopartikel-Zubereitungen, die direkt, ohne dass es zu Flockungs- oder sonstigen Entmischungserscheinungen kommt, mit der Beschichtungslösung und/oder mindestens einer der Komponenten der Beschichtungslösung abmischbar sind. Besonders bevorzugt ist die Verwendung von ZnO-Nanopartikeln, die in der Deutschen Patentanmeldung DE-A 19907704.5a beschrieben worden sind.

Abriebfeste Beschichtungen im Sinne der Erfindung sind solche, die nach Taber-Abraser-Verkratzung (bestimmt nach ISO 3537, 1 000 Cyclen, 500 g Belastung pro Rad, CS-10-F-Steine) Streulicht auf der Verkratzungsspur (bestimmt nach ASTM D 1003) von weniger als 20 %, bevorzugt kleiner 10 %, besonders bevorzugt kleiner 5 % zeigen. Im Vergleich dazu zeigt z.B. handelsübliches Makrolon® bereits nach 100 Cyclen im Taber-Abraser-Test Streulicht von mehr als 30 % auf der Verkratzungsspur.

Die abriebfesten Beschichtungen aus Sol-Gel-Materialien basieren auf Kondensaten niedermolekularer Organoalkoxysilane und/oder Organosilanole, die durch weitere Kondensation und/oder Polymerisation (im Falle ungesättigter oder epoxyfunktioneller Organosilylreste) auf dem Substrat zu hochabriebfesten Beschichtungen gehärtet werden können. Solche Sol-Gel-Materialien sind in der Literatur vielfach beschrieben, beispielsweise in der US-A 5 677 410, DE-A 196 03 241, WO 98/52992, EP-A 947 520, DE-A 45 38 361 und EP-A 0 263 428.

Zinkoxid-haltige Beschichtungen im Sinne der Erfindung sind solche, die neben einem geeigneten Bindemittel Zinkoxidpartikel mit einer Primärteilchengröße von 1 bis 30 nm enthalten, so dass im Bereich des sichtbaren Lichts keine nennenswerte Streuung oder Absorption beobachtet wird. Als Bindemittel für Zinkoxid bieten sich insbesondere solche an, die eine geringe oder keine Neigung zu photooxidativer Zersetzung aufweisen. Die Beschichtungen enthalten von 1 bis 50 Gew.-% Zinkoxid.

Der einfachste erfindungsgemäße Schichtaufbau auf dem Kunststoff besteht aus einer Zinkoxid-haltigen Schicht und einer abriebfesten Deckschicht. Es können aber auch weitere Schichten aufgebracht werden.

In einer Ausführungsform der vorliegenden Erfindung werden Zinkoxid-haltige und abriebfeste Oberflächen dadurch erhalten, dass auf das Substrat zunächst eine Zinkoxid-haltige Schicht appliziert wird und leichtflüchtige Bestandteile wie Lösemittel gegebenenfalls verdampft werden. Mit oder ohne weitere Aushärtung wird dann die abriebfeste Beschichtung aufgebracht und diese schließlich thermisch oder durch Bestrahlung ausgehärtet.

In einer weiteren Ausführungsform der vorliegenden Erfindung wird vor dem Aufbringen der Zinkoxid-haltigen Schicht die Oberfläche des Substrates chemisch mit einem Haftvermittler oder physikalisch (Plasma, Corona) behandelt, um eine verbesserte Haftung zu erzielen. Es ist allerdings auch möglich, den Haftvermittler selbst als Bindemittel für die Zinkoxid-Partikel zu verwenden, womit ein zusätzlicher Beschichtungsschritt vermieden werden kann.

Es ist darüber hinaus möglich, die abriebfeste Schicht des erfindungsgemäßen Mehrschichtaufbaus als reine oder überwiegend anorganische Schicht aus der Gasphase abzuscheiden. Diese kann dann beispielsweise aus SiO₂, TiO₂, Al₂O₃ oder Mischungen daraus bestehen. Dadurch kann die Abriebfestigkeit weiter erhöht und/oder die antireflektierende Wirkung verbessert werden.

Die Oberflächenmodifizierung von nanokristallinem Zinkoxid in wässriger Dispersion ist mit Organosilanen der verschiedensten Art möglich, wobei das Organosilan mindestens einen kondensationsvernetzenden Rest aufweisen muss. Beispiele für solche Reste sind Alkoxyreste, insbesondere Methoxy- oder Ethoxyreste, Silanole oder Acetoxyreste. Der Organorest des Organosilans kann aliphatisch, aromatisch oder gegebenenfalls substituiert aliphatisch oder aromatisch sein. Als Beispiel für solche Organosilane sei z.B. Methyltriethoxysilan oder 3-Glycidyloxypropyltrimethoxysilan genannt.

In einer Ausführungsform der vorliegenden Erfindung erfolgt die Oberflächenmodifizierung von nano-Zinkoxid in wässriger Dispersion durch Zugabe des Organosilans (rein oder gelöst in einem geeigneten Lösemittel) und Rühren der Reaktionsmischung bei Temperaturen zwischen 15°C und 100°C. Um Agglomeration zu vermeiden kann es auch sinnvoll sein, die Reaktion in Gegenwart von Ultraschall durchzuführen.

Das Verhältnis von Organosilan und nano-Zinkoxid in der ausgehärteten Beschichtung wird üblicherweise so gewählt, dass nach der Applikation auf ein Substrat wie z.B. Kunststoff, Glas, Keramik, Metall, etc. und Trocknung/Aushärtung eine transparente Beschichtung erhalten wird und liegt zwischen 1-50 Gew-% nano-Zinkoxid zu 5-90 Gew-% Organosilan.

Besonders bevorzugte Untergründe sind transparente Substrate.

Die Applikation der Zinkoxid-haltigen und abriebfesten Schicht kann nach allen gängigen Techniken erfolgen, wie z.B. Schleudern, Sprühen, Tauchen, Gießen, Rakeln oder Pinseln.

Als Substrat, ist Polycarbonat geeignet.

Die erfindungsgemäßen dauerhaft UV-beständig und abriebfest beschichteten, transparenten Kunststoffe können z.B. als Ersatz von Glas für die Verscheibung von Gebäuden oder Fahrzeugen (Autos, Busse, Lastkraftwagen, Bahnen) eingesetzt werden.

### Beispiele

### Kratzfestbeschichtung 1:

Die Herstellung einer Kratzfestbeschichtung erfolgte aus einer Sol-Gel-Lösung bestehend aus 6,8 % cyclo-{SiOCH₃[(CH₂)₂Si(CH₃)₂OH]}₄, 32,1 % Tetraethylorthosilicat, 9,6 % Aluminium-2-butylat, 5,1 % Acetessigester, 12,6 % Wasser, 32,8 % 1-Methoxy-2-propanol und 1 % Tinuvin^{®} 384; die Herstellung ist in der EP-A 947 520 beschrieben. Cyclo-{SiOCH₃[(CH₂)₂Si(CH₃)₂OH]}₄, wurde wie in der US-A 5 880 305 beschrieben, hergestellt. Im weiteren wird Cyclo-{SiOCH₃[(CH₂)₂Si(CH₃)₂OH]}₄ als D4-Silanol bezeichnet.

### Kratzfestbeschichtung 2:

10 g TEOS wurden in 5,5 g 1-Methoxy-2-propanol gelöst und mit 1,0 g 0,1 N p-Toluolsulfonsäure unter Rühren vermischt und weitere 30 Minuten gerührt. Danach wurden weitere 1,0 g 0,1 N p-Toluolsulfonsäure zugesetzt und weitere 60 Minuten gerührt (Vorhydrolysat). 3,0 g Aluminium-sec.-butylat wurden in 1,0 g 1-Methoxy-2-propanol gelöst, mit 1,6 g Acetessigester unter Eiskühlung versetzt und dem Vorhydrolysat bei 5°C zugesetzt. Nach erfolgter Zugabe werden weitere 2,0 g 0,1 N p-Toluolsulfonsäure sowie 2,4 g D4-Silanol in 3,8 g 1-Methoxy-2-propanol gelöst hinzugegeben und weitere 60 Minuten gerührt.

Die Applikation der verschiedenen Schichten erfolgte mittels Schleudern, wobei jeweils immer die maximale Umdrehungszahl (in U/min) und die Haltezeit (in sec) bei maximaler Drehzahl angegeben sind.

Die Abriebfestigkeit wurde mittels Taber-Abraser-Test (ISO 3537; 1000 Cyclen, 500 g pro Rad, CS-10-F-Steine) und anschließender Bestimmung des Streulichts überprüft (ASTM D 1003). Die Beständigkeit des beschichteten Makrolon® 3103 wurde durch QUV-A- nach ASTM G 154-97 (Cyclus 4) und QUV-B-Bewitterung nach DIN 53 384 ermittelt. Als Maß für die Vergilbung des Polycarbonats wurde der Gelbindex b* nach DIN 6174 in Reflektion bestimmt. Die Zentrifugationsschritte wurden in einer Laborzentrifuge der Fa. Heraeus (Variofuge RE) mit einem Rotor mit 20,4 cm Rotorradius durchgeführt.

Allgemein stellt sich ein möglicher Schichtaufbau wie folgt dar:

| |
|---|
| Kratzfestschicht |
| ZnO-haltige Schicht |
| Haftvermittler (Primer) |
| Polycarbonat |

Dabei ist es möglich, dass bei einer ausreichenden Haftung der ZnO-haltigen Schicht auf Polycarbonat auf einen Haftvermittler (Primer) gegebenenfalls verzichtet werden kann. Ferner ist es auch möglich, den Haftvermittler als Bindemittel für die ZnO-Partikel zu verwenden, so dass sich folgender Schichtaufbau ergäbe:

| |
|---|
| Kratzfestschicht |
| Haftvermittler + ZnO |
| Polycarbonat |

### Beispiel 1

### Herstellung von nicht-oberflächenmodifiziertem nano-Zinkoxid

590 g Zinkacetat-Dihydrat wurden bei Raumtemperatur in einem 6L-Kolben in 2 000 g MeOH p.a. verrührt. Das Zinkacetat löste sich nicht vollständig auf. Parallel dazu wurde eine KOH-Lösung aus 296,1 g KOH p.a. (86,6 %) in 1 000 g MeOH p.a. unter Kühlung angesetzt. Nun wurden 100 ml der KOH-Lösung zu der Zinkacetat-Lösung hinzugegeben. Dabei ging der bisher ungelöste Teil des Zinkacetats in Lösung. Dann wurde der Rest der KOH-Lösung in einem Schwung dazugegeben. Es entstand sofort eine voluminöse, weiße Fällung, die nach etwa 70 min Rührzeit transluzent wurde. Nun wurde das Sol über 25 min bis zum Sieden erhitzt, die Heizquelle dann ausgeschaltet. Nach Stehen über Nacht hatte sich ein weißer Bodensatz gebildet. Nach Aufrühren wurde der Bodensatz abzentrifugiert (30 min., 5 000 U/min.). Es wurden 295,9 g eines gelartigen Rückstandes erhalten, dessen röntgendiffraktometrische Untersuchung als einzige kristalline Phase Zinkoxid zeigte. Der gelartige Rückstand wurde mit 439,3 g Methylenchlorid versetzt und solange geschüttelt, bis der Bodensatz vollständig in Dispersion gegangen war. Die entstandene Dispersion war transluzent und über mehrere Monate sedimentationsstabil.

### Beispiel 2

### Herstellung von nicht-oberflächenmodifiziertem nano-Zinkoxid, geeignet für die Oberflächenmodifizierung in wässriger Dispersion mit Organosilanen

590 g Zinkacetat-Dihydrat wurden in einem 6L-Kolben in 2 000 g MeOH p.a. suspendiert und auf 60°C erhitzt. Das Zinkacetat löste sich auf. Parallel dazu wurde eine KOH-Lösung aus 302 g KOH p.a. (84,7 %) in 1 000 g MeOH p.a. unter Kühlung angesetzt. Nun wurde die KOH-Lösung zu der 60°C warmen Zinkacetat-Lösung in einem Schwung hinzugegeben. Es entstand sofort eine voluminöse, weiße Fällung, die nach etwa 5 min transluzent wurde. Es wurde bei 60°C weitere 80 min gerührt, der Ansatz war am Ende der Rührzeit milchig-weiß. Nach Entfernen der Heizquelle wurde weitere 210 min gerührt. Nach Stehen über Nacht wurden 3 243 g abgesaugt und durch 1 000 g MeOH p.a. ersetzt. Das Sol wurde nun 20 min gerührt. Nach 45 min Absetzzeit wurden weitere 768 g vom Überstand abgesaugt und durch 500 g MeOH p.A. ersetzt. Das Sol wurde wiederum für 30 min gerührt und nach 40 min Absetzzeit wurden nochmals 745 g vom Überstand abgesaugt und durch 500 g MeOH p.A. ersetzt. Nun wurde das Sol ein letztes mal für 30 min gerührt, anschließend wurde es zentrifugiert (30 min, 5 000 U/min) und abdekantiert. Es wurden 253,15 g eines gelartigen Rückstandes erhalten, dessen röntgendiffraktometrische Untersuchung als einzige kristalline Phase Zinkoxid zeigte.

### Beispiel 3:

### Zweischichtaufbau mit nicht-oberflächenmodifiziertem nano-Zinkoxid aus Beispiel 1

Zunächst wurden 29,5 g Aluminium-sec.-butylat in 5,9 g 1-Methoxy-2-propanol gelöst und mit 15,5 g Acetessigester versetzt und auf 60°C erwärmt. Zu dieser Lösung wurden 17,3 g D4-Silanol in 31,8 g 1-Methoxy-2-propanol unter Rühren zugetropft. Nach erfolgter Zugabe wird eine weitere Stunde bei 60°C gerührt (Aluminium/D4-Silanol-Precursor). Parallel dazu wurden 58,0 g Tetraethoxysilan (TEOS) in 50,3 g n-Butanol gelöst und mit 5,0 g 0,1 N p-Toluolsulfonsäure versetzt und eine Stunde bei Raumtemperatur gerührt (Vorhydrolysat). Im Anschluß daran wurde das Vorhydrolysat mit dem auf Raumtemperatur abgekühlten Aluminium/D4-Silanol-Precursor unter Rühren vermischt und die Lösung eine weitere Stunde gerührt. Danach wurden 94,8 g der nach Beispiel 1 hergestellten nano-Zinkoxid-Dispersion (25 Gew.-% ZnO), 5,0 g demineralisiertes H₂O und weitere 20,7 g D4-Silanol in 38,1 g 1-Methoxy-2-propanol zugegeben und das Reaktionsgemisch eine weitere Stunde bei Raumtemperatur gerührt.

Zur Verbesserung der Haftung wurden dann 5 Makrolon^{®} -Platten mittels Schleudern (1000 U/min, 20 sec) mit Hydroxymethyltriethoxysilan (HMTS, 50 Gew.-% in Ethanol) beschichtet und eine Stunde bei 130°C thermisch behandelt. Danach wurde die Beschichtungslösung mittels Sprühen auf die so vorbehandelten Maktolon^{®}-Platten appliziert; nach der Aushärtung (1 Stunde 130°C) wurden die Makrolon^{®}-Platten dann der QUV-A-Bewitterung unterzogen.

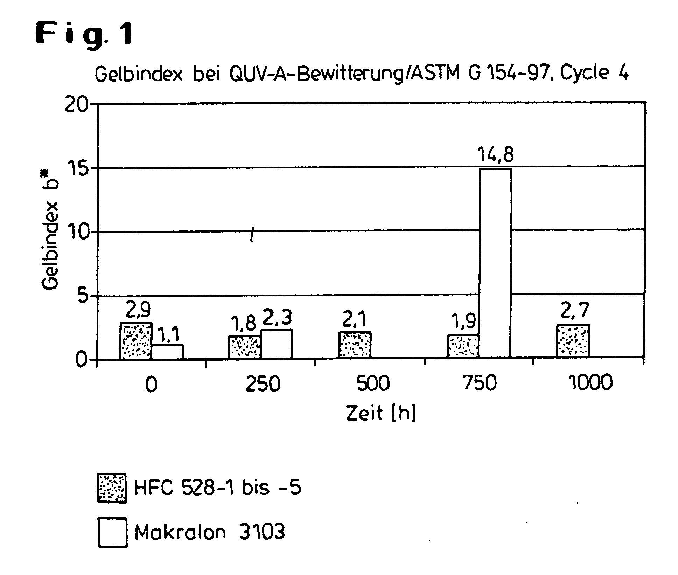

Die Ergebnisse der QUV-A-Bewitterung sind in Tabelle 1 zusammengefaßt und in der Figur 1 grafisch dargestellt.

**Tabelle 1:**

| Proben-Nr. | 0 h | 250 h | 500 h | 750 h | 1000 h |
|---|---|---|---|---|---|
| HFC 528-1 | 2,9 | X | X | X | X |
| HFC 528-2 | 2,8 | 1,8 | X | X | X |
| HFC 528-3 | 3,2 | X | 2,1 | X | X |
| HFC 528-4 | 2,5 | X | X | 1,9 | X |
| HFC 528-5 | 2,9 | X | X | X | 2,7 |

### Beispiel 4:

### Oberflächenmodifizierung von nano-Zinkoxid aus Beispiel 2 in wäßriger Dispersion mit 3-Glycidyloxypropyltrimethoxysilan

10 g des nach Beispiel 2 hergestellten *nano*-Zinkoxid-Gels (bestehend aus ca. 55 Gew.-% ZnO und ca. 40 Gew.-% MeOH, dest. Wasser, anorg. Salze) wurden mit 90 g dest. Wasser vermischt und solange kräftig gerührt bis eine transluzente Dispersion erhalten wurde. Zu dieser wurden dann bei 70°C im Ultraschallbad 10 g 3-Glycidyloxypropyltrimethoxysilan gegeben; danach wurde die Reaktionsmischung weitere 30 min unter Ultraschallbehandlung auf 70°C erwärmt (das Reaktionsgefäß war nicht verschlossen, um das entstehende Methanol entweichen zu lassen). Nach dem Abkühlen wurde eine farblos-milchige Dispersion/Emulsion erhalten.

### Beispiel 5:

### Dreischichtaufbau mit oberflächenmodifiziertem nano-Zinkoxid (Bestimmung der Abriebfestigkeit mittels Taber-Abraser-Test)

Zur Verbesserung der Haftung wurde eine erste Makrolon^{®} -Platten (10x10 cm) zunächst mit 3-Aminopropyltrimethoxysilan, (AMMO, 2000 U/min, 20 sec) und eine zweite mit Hydroxymethyltriethoxysilan (HMTS, 50 Gew.-% in Ethanol, 1000 U/min, 20 sec) beschichtet und 30 min bei 130°C thermisch behandelt. Danach wurde die nach Beispiel 4 hergestellte *nano*-Zinkoxid-Dispersion auf beide Makrolon^{®}-Platten mit einem Filmziehrahmen aufgebracht (Spalthöhe 30 µm) und diese 30 min bei 130°C gehärtet. Schließlich wurde noch die Kratzfestbeschichtung 2 appliziert (500 U/min, 20 sec), die eine Stunde bei 80°C und dann eine Stunde bei 130°C gehärtet wurde. Nach Taber-Abraser-Verkratzung wurde eine Streulichtzunahme von 4,0 (AMMO) bzw. 3,5 (HMTS) Prozentpunkten gefunden.

Im Vergleich dazu zeigt handelsübliches, kratzfest beschichtetes Polycarbonat (z.B. Margard^{®} MR 10) eine Streulichtzunahme von ca. 12 Prozentpunkten.

### Beispiel 6:

### Zweischichtaufbau mit oberflächenmodifiziertem nano-Zinkoxid (Bestimmung der UV-Beständigkeit mittels QUV-B-Bewitterung)

Zur Verbesserung der Haftung wurde eine Makrolon^{®} -Platte (7,5x15 cm) zunächst mit Hydroxymethyltriethoxysilan (50 Gew.-% in Ethanol) beschichtet (1000 U/min, 20 sec) und danach eine Stunde bei 130°C thermisch behandelt. Danach wurde die gemäß Beispiel 4 hergestellte nano-Zinkoxid-Dispersion aufgeschleudert (400 U/min, 20 sec) und nach einer Stunde Aushärtung bei 130°C wurde schließlich noch die Kratzfestbeschichtung 2 appliziert und diese 1 h bei 80°C und eine Stunde 130°C ausgehärtet. Danach wurde die UV- und Witterungsbeständigkeit mittels QUV-B-Bewitterung überprüft. Bestimmt wurde der Gelbindex b* als Maß für die Vergilbung des Polycarbonates.

Im Vergleich dazu zeigt unbeschichtetes Makrolon^{®} 3103 nach 500 h einen Gelbwert b* von 18,5.

Die Ergebnisse der QUV-B-Bewitterung sind in Tabelle 2 zusammengefaßt.

**Tabelle 2:**

| Probe | 0 h | 250 h | 500 h |
|---|---|---|---|
| Makrolon^{®} 3103 mit nano-ZnO | 1,3 | 1,4 | 2,5 |
| Makrolon^{®} 3103 | | 11,2 | 18,5 |

### Beispiel 7

### Dreischichtaufbau mit nicht-oberflächenmodifiziertem nano-Zinkoxid aus Beispiel 1 (Bestimmung der Kratzfestigkeit mittels Taber-Abraser-Test)

Zunächst wurden 29,5 g Aluminium-sec.-butylat in 5,9 g 1-Methoxy-2-propanol gelöst und mit 15,5 g Acetessigester versetzt und auf 60°C erwärmt. Zu dieser Lösung wurden 17,3 g D4-Silanol in 31,8 g 1-Methoxy-2-propanol unter Rühren zugetropft. Nach erfolgter Zugabe wird eine weitere Stunde bei 60°C gerührt (Aluminium/D4-Silanol-Precursor).

Parallel dazu wurden 58,0 g TEOS wurden in 50,3 g 1-Butanol gelöst und mit 5,0 g 0,1 N p-Toluolsulfonsäure unter Rühren vermischt und weitere 60 Minuten gerührt (Vorhydrolysat). Danach wurden der Aluminium/D4-Silanol-Precursor und das Vorhydrolysat vereinigt und weitere 60 Minuten gerührt. Schließlich wurden 94,8 g ZnO-Sol (31 Gew.-% in Methylenchlorid aus Beispiel 1) und 5,0 g demineralisiertes Wasser zugegeben bevor weitere 20,7 g D4-Silanol in 38,1 g 1-Methoxy-2-propanol zugesetzt wurden. Die erhaltene Lösung wurde anschließend weitere 60 Minuten gerührt, bevor die Applikation erfolgte.

Zur Verbesserung der Haftung der erhaltenen Zinkoxid-Beschichtungslösung auf Polycarbonat wurden 5 Makrolon^{®}-Platten (100 mm x 100 mm) mittels Schleudern (1000 U/min, 20 sec.) mit Hydroxymethyltriethoxysilan (HMTS, 50 Gew.-% in Ethanol) beschichtet und eine Stunde bei 130°C thermisch behandelt.

Als Haftvermittler können aber auch andere Verbindungen wie z.B. Acrylate, Acrylatalkoxysilane, Methacrylate, Methacrylatalkoxysilane, Aminosilane oder aber auch Polyurethane verwendet werden.

Nach Aufbringung des Haftvermittlers (Primer) wurde die Zinkoxid-Beschichtungslösung mittels Schleudern (2000 U/min; 20 sec.) auf die Makrolon^{®}-Platten aufgetragen; diese wurde anschließend 30 Minuten bei 130°C thermisch gehärtet.

Anschließend wurde durch Schleudern (800 U/min; 20 sec.) die Kratzfestbeschichtung 1 aufgetragen und 60 min. bei 130°C ausgehärtet.

Nach Taber-Abraser-Verkratzung wurde eine Streulichtzunahme von 4,6 Prozentpunkten gefunden.

## Patentansprüche

1. Dauerhaft gegen UV-Strahlung geschützte Kunststoffe mit einer abriebfesten Oberfläche, **dadurch gekennzeichnet, daß** auf die Kunststoffe ein Überzug aus einem Mehrschichtaufbau, bestehend aus mindestens einer zinkoxid-haltigen und mindestens einer abriebfesten Schicht, aufgebracht wird,
die abriebfeste Beschichtung nach Taber-Abraser-Verkratzüng (bestimmt nach ISO 3537, 1 000 Cyclen, 500 g Belastung pro : Rad, CS-10-F-Steine) Streulicht auf der Verkratzungsspur (bestimmt nach ASTM D 1003) von weniger als 20 %, aufweist und aus Sol-Gel-Materialien basierend auf Kondensaten niedermolekularer Organoalkoxysilane und/oder Organosilanole besteht und
die Zinkoxidpartikel eine Primärteilchengröße von 1 bis 30 nm aufweisen.

2. Oberflächengeschützte Kunststoffe nach Anspruch 1, **dadurch gekennzeichnet, dass** das Zinkoxid mit 3-Glycidyloxypropyltrimethoxysilan oberflächenmodifiziert ist.

3. Oberflächengeschützter Kunststoff, nach Anspruch 1 **dadurch gekennzeichnet, dass** transparente Kunstoffe eingesetzt werden.

4. Oberflächengeschützer Kunststoff nach Anspruch 1, **dadurch gekennzeichnet, dass** der Kunststoff Polycarbonat ist.

## Claims

1. Durably UV-protected plastics having an abrasion-resistant surface, **characterized in that** the plastics are coated with a multilayer structure consisting of at least one zinc oxide-containing layer and at least one abrasion-resistant layer; the abrasion-resistant coating, after scratching with a Taber abrader (to ISO 3537, 1000 cycles, 500 g load per wheel, CS-10-F abrasive media), exhibits scattered light on the scratch track (to ASTM D 1003) of less than 20% and consists of sol-gel materials based on condensates of low molecular weight organoalkoxysilanes and/or organosilanols; and the zinc oxide particles have a primary particle size of 1 to 30 nm.

2. Surface-protected plastics according to Claim 1, **characterized in that** the zinc oxide is surface modified with 3-glycidyloxypropyltrimethoxysilane.

3. Surface-protected plastic according to Claim 1, **characterized in that** transparent plastics are used.

4. Surface-protected plastic according to Claim 1, **characterized in that** the plastic is polycarbonate.

## Revendications

1. Matières plastiques protégées durablement contre le rayonnement UV, avec une surface résistant à l'usure, **caractérisées en ce que** sur la matière plastique, un enduit avec une structure à plusieurs couches, consistant en au moins une couche contenant de l'oxyde de zinc et au moins une couche résistant à l'usure, est appliqué, le revêtement résistant à l'usure présente une lumière diffusée sur la trace d'éraflure (déterminée selon ASTM D 1003) de moins de 20% après abrasion-éraflure de Taber (déterminée selon ISO 3537, 1000 cycles, charge de 500 g par roue, meules CS-10-F), consiste en un matériau sol-gel à base de condensats d'organoalcoxysilanes et/ou d'organosilanols de faible poids moléculaire, et les particules d'oxyde de zinc présentent une taille des particules primaires allant de 1 à 30 nm.

2. Matière plastique protégée en surface selon la revendication 1, **caractérisée en ce que** l'oxyde de zinc est modifié en surface avec le 3-glycidyloxy-propyltriméthoxysilane.

3. Matière plastique protégée en surface selon la revendication 1, **caractérisée en ce que** l'on met en oeuvre des matières plastiques transparentes.

4. Matière plastique protégée en surface selon la revendication 1, **caractérisée en ce que** la matière plastique est un polycarbonate.
